# EUROPÄISCHE PATENTSCHRIFT

(11) **EP 0 772 639 B1**
(45) Veröffentlichungstag und Bekanntmachung des Hinweises auf die Patenterteilung: **14.10.1998**
(21) Anmeldenummer: 95926871.5
(22) Anmeldetag: 13.07.1995
(51) Int. Cl.: C08G 12/42

(54) **GLYKOLETHERHALTIGE AMINOTRIAZINDERIVATE UND IHRE VERWENDUNG IN LACKHARZEN**
GLYCOLETHER-CONTAINING AMINOTRIAZINE DERIVATIVES AND THEIR USE IN RESINS FOR LACQUERS AND VARNISHES
DERIVES D'AMINOTRIAZINE RENFERMANT DES ETHERS DE GLYCOL ET LEUR UTILISATION DANS DES RESINES POUR VERNIS

(30) Priorität: 23.07.1994 DE 4426186
(43) Veröffentlichungstag der Anmeldung: 14.05.1997
(73) Patentinhaber: BASF AKTIENGESELLSCHAFT, 67056 Ludwigshafen (DE)
(72) Erfinder: NIESSNER, Manfred, D-67105 Schifferstadt (DE); WEISS, Wolfram, D-67112 Mutterstadt (DE); TROPSCH, Jürgen, D-67122 Altrip (DE); KUMMER, Matthias, D-67273 Weisenheim (DE); MEICHSNER, Georg, D-67061 Ludwigshafen (DE)
(86) Internationale Anmeldenummer: EP9502747
(87) Internationale Veröffentlichungsnummer: WO9603449

(56) Entgegenhaltungen:
- EP-A- 0 062 179
- EP-A- 0 262 518
- FR-A- 2 307 806

## Beschreibung

Die Erfindung betrifft Bindemittel, enthaltend
A) ein Aminotriazinderivat, bei dem die primären Aminogruppen des Triazins im Mittel mit mindestens einem Mol Formaldehyd pro Mol primärer Aminogruppen methyloliert und diese Methylolgruppen im Mittel mit mindestens 0,5 Mol primärem Alkohol pro Mol Methylolgruppe verethert sind, und es sich bei den primären Alkoholen um ein Gemisch enthaltend
   a) 0,5 - 99,5 mol-% eines C₁-C₄-Alkanols und
   b) 99,5 - 0,5 mol-% eines Alkohols der Formel

      R¹-O-[R²-O]ₙ-R³-OH I,

      worin R¹ für eine C₁-C₂₄-Alkylgruppe oder eine C₆-C₁₂-Arylgruppe, welche gegebenenfalls durch ein bis drei C₁-C₈-Alkylgruppen substituiert sein kann und, R² und R³ unabhängig voneinander für eine C₂-C₈-Alkylengruppe stehen und n eine ganze Zahl von 1 - 100 bedeutet, oder eines Gemisches von höhersiedenden Alkoholen mit einem Siedepunkt oberhalb 120°C bei 1 bar, welches mindestens 10 mol-%, bezogen auf die höhersiedenden Alkohole, Alkohole der Formel I enthält, handelt und
B) ein mit dem Aminotriazinderivat vernetzbares radikalisches Polymerisat, Polykondensat oder Polyaddukt.

Weiterhin betrifft die Erfindung ein Aminotriazinderivat, bei dem die primären Aminogruppen des Triazins im Mittel mit mindestens einem Mol Formaldehyd pro Mol primärer Aminogruppen methyloliert und diese Methylolgruppen im Mittel mit mindestens 0,5 Mol primärem Alkohol pro Mol Methylolgruppe verethert sind, und es sich bei dem primären Alkohol um ein Gemisch, enthaltend
a) 50 - 99,5 mol-% eines C₁-C₄-Alkanols und
b) 0,5 - 50 mol-% eines Alkohols der obigen Formel I oder eines Gemischs von höhersiedenden Alkoholen mit einem Siedepunkt oberhalb 12°C bei 1 bar, welches mindestens 10 mol-%, bezogen auf die höhersiedenden Alkohole, Alkohole der Formel I enthält.

Hochmethylolierte und mit kurzkettigen Alkoholen weitgehend veretherte Aminotriazine, insbesondere Melamin, werden als Vernetzer für Hydroxylgruppen enthaltende Polymerisate in Lackbindemitteln verwendet.

Ein hoher Alkylierungs- und Veretherungsgrad hat gegenüber Aminotriazinderivaten mit hohen Anteilen an freien NH- und OH-Gruppen eine niedrigere Lösungsviskosität zur Folge. Dies ermöglicht die Herstellung von medium- und insbesondere high-solids-Lacken. Derartige Beschichtungsmittel mit reduziertem Gehalt an flüchtigen Lösemitteln sind aus ökologischen Gründen zu bevorzugen (geringere organisch C-Emission) und bieten dem Lackanwender Kostenvorteile (geringerer Aufwand bei Lösemittelaufarbeitung oder -verbrennung). Gleichzeitig jedoch führt der hohe Alkylierungs- und Veretherungsgrad zu einer gegenüber teilmethylolierten und teilveretherten Aminotriazinderivaten verringerten Reaktivität beim Vernetzen von OH-Gruppen enthaltenden Lackbindemitteln.

Die geringere Reaktivität läßt sich nur durch höhere Einbrenntemperaturen mit dem Nachteil des höheren Energieverbrauchs und der Vergilbung der lackierten Oberflächen oder durch erhöhten Zusatz von sauren Katalysatoren, Säuren und/oder deren Aminsalzen mit Nachteilen einer verringerten Witterungsbeständigkeit (hydrophile Säure bleibt im Lack) oder des Polymerenabbaus beim Einbrennen (reverse curing bei Polyestern) ausgleichen.

Aus der DE-A 24 14 426 sind mit Ethylenglykolmonoethylether veretherte Methylolaminotriazine und ihre Verwendung als Vernetzer für Hydroxylgruppen enthaltende Polymerisate bekannt. Die Reaktivität dieser Aminotriazinderivate zur Vernetzung mit Hydroxylgruppen ist jedoch noch nicht ausreichend.

In der DE-A-36 32 587 werden Melamin-Formaldehyd-Harze beschrieben, welche mit Glykolethern, z.B. auch Polyethylenglykol, verethert sind. Neben den Glykolethern können noch andere Alkohole zur Veretherung verwendet werden. Glykolether liegen in den Gemischen jedoch grundsätzlich in deutlichem Überschuß vor. Die Harze werden durch gleichzeitige Umsetzung von Melamin, Formaldehyd und Glykolethern hergestellt, wobei die Umsetzung weitgehend wasserfrei, also unter Verwendung von Paraformaldehyd durchgeführt wird.

Aus EP-A-262 518 sind Aminotriazinharze bekannt, welche mit Glycolethern bzw. Polyglycolethern verethert sind.

Die Aufgabe der vorliegenden Erfindung bestand darin, Aminotriazinderivate herzustellen, die aufgrund ihrer geringen Lösungsviskosität für die Herstellung von lösemittelarmen Lacken geeignet sind und gegenüber den üblichen Harzen wie z.B.Hexamethoximethylmelaminharze, eine deutlich erhöhte Reaktivität mit OH-gruppenhaltigen Bindemitteln aufweisen.

Weiterhin sind eine gute Elastizität, gute Verträglichkeit der Aminotriazinderivate mit den anderen Komponenten von Bindemitteln, z.B. für Lacke, sowie gute anwendungstechnische Eigenschaften von Bindemitteln, welche die Aminotriazinderivate enthalten, gewünscht.

Bei den oben beschriebenen Aminotriazinderivaten A) handelt es sich um zumindest teilweise methylolierte und veretherte Aminotriazine.

Als Aminotriazine in Betracht kommen z.B. Melamin, Benzoguanamin, Acetoguanamin und Bisguanamine wie Adipo-, Glutaro- oder Methylglutarobisguanamin und Spiroguanamine. In Betracht kommen auch Verbindungen, welche mehrere, z.B. kondensierte, Aminotriazinkerne enthalten.

Bevorzugt sind Melamin und Verbindungen, welche mehrere Melaminkerne, z.B. 2 bis 5 über Methylolgruppen verbrückte Melamine enthalten, oder deren Gemische. Solche Gemische von Melaminen und höherkondensierten Melaminharzen enthalten vorzugsweise mindestens 40 mol-% Melamin. Besonders bevorzugt ist Melamin.

Die Aminotriazine sind im Mittel mit mindestens 1 Mol, vorzugsweise mindestens 1,4 Mol, besonders bevorzugt mit mindestens 1,7 Mol Formaldehyd pro Mol primärer Aminogruppen methyloliert und diese Methylolgruppen im Mittel mit mindestens 0,5 Mol, vorzugsweise mindestens 0,6 Mol und besonders bevorzugt mit mindestens 0,7 Mol eines Gemisches von primären Alkoholen pro Mol Methylolgruppe verethert.

Dieses Gemisch enthält
a) 0,5 bis 99,5, vorzugsweise 50 bis 99,5 besonders bevorzugt 85 bis 99,5 und ganz besonders 90 bis 99 mol-%, bezogen auf das Gemisch, eines C₁-C₄-Alkanols und
b) 99,5 bis 0,5, vorzugsweise 50 bis 0,5, besonders bevorzugt 15 bis 0,5 und ganz besonders bevorzugt 10 bis 1 mol-%, bezogen auf das Gemisch, eines Alkohols der obigen Formel I oder eines Gemischs von höhersiedenden Alkoholen mit einem Siedepunkt oberhalb 120°C bei 1 bar, welches mindestens 10 mol-%, vorzugsweise mindestens 30 mol-%, besonders bevorzugt mindestens 60 mol-% eines Alkohols der Formel I enthält.

Geeignete C₁-C₄-Alkanole sind alle mit einem Siedepunkt unter 120°C bei 1 bar, bevorzugt Methanol, i-Butanol oder n-Butanol und Gemische solcher Alkanole.

Bevorzugte Alkohole der Formel I sind solche, bei denen R¹ für eine C₁-C₂₄-, besonders bevorzugt für eine C₁-C₆-Alkylgruppe steht, R² und R³ unabhängig voneinander für eine C₂-C₈-, besonders bevorzugt eine C₂-C₄-Alkylengruppe und ganz besonders bevorzugt R² und R³ für eine Ethylengruppe stehen und n eine ganze Zahl von 1 bis 20, besonders bevorzugt von 1 bis 5 bedeutet.

Als Alkanole der Formel I genannt seien z.B. Di-, Tri- oder Tetraethylenglycolmonomethylether, bzw. die entsprechenden Monobutylether.

Höhersiedende Alkohole mit einem Siedepunkt > 120°C bei 1 bar, welche im Gemisch mit den Alkoholen der Formel I eingesetzt werden können, sind vorzugsweise solche mit bis zu 20 C-Atomen und ohne weitere Heteroatome. Genannt seien z.B. n-Pentanol, 2-Pentanol, Cyclopentanol, 2-Methylbutanol, 3-Methyl-1-butanol, cyclohexanol, 4-Methyl-2-pentanol, Methylcyclohexanol, Hexahydrobenzylalkohol, 2,4-Dimethyl-3-pentanol, 2-Ethylhexanol, Nonanol, Decanol, Oxo-und Fettalkohole mit Kettenlängen von C₁₂ bis C₂₀ wie Laurylalkohol, Tridecanol, Myristylalkohol, Cetylalkohol, Stearylalkohol oder Oleylalkohol, Aromaten enthaltende Alkohole wie Benzylalkohol, o-, m- oder p-Methylbenzylalkohol, 1-Phenylethanol, 2-Phenylethanol, α-Ethylbenzylalkohol, α-Isopropylbenzylalkohol, Hydroximethylnaphthalin, 1-(α-Hydroxiethyl)naphthalin.

Die Herstellung der Aminotriazinderivate A) erfolgt vorzugsweise durch Umacetalisierung von Aminotriazinen, welche entsprechend des oben genannten Methylolierungsgrades bzw. des oben genannten Veretherungsgrad methyloliert und ausschließlich mit den C₁-C₄-Alkanolen a) verethert sind. Zur Umetherung werden diesen Aminotriazinderivaten die Alkohole b) zugesetzt. Die Alkohole b) werden gegebenenfalls nur in geringem Überschuß, bezogen auf den gewünschten Gehalt dieser Alkohole im Aminotriazinderivat eingesetzt.

Die Umacetalisierung wird in der Regel ohne Zusatz von Lösemitteln durchgeführt. Prinzipiell ist der Zusatz von Lösemitteln möglich, dabei handelt es sich vorzugsweise entweder um den im Ausgangsprodukt gebundenen Alkohol a), also beispielsweise Methanol, Ethanol, n- oder Iso-Butanol, oder um aprotische Lösemittel die unter den Reaktionsbedingungen nicht mit den Einsatzstoffen reagieren können. Derartige Lösungsmittel sind unter anderem Ether wie beispielsweise Diethylether, Diisopropylether, Methyl-tert.-butylether, Tetrahydrofuran, Dioxan und 1,2-Dimethoxiethan, aromatische Lösemittel wie beispielsweise Benzol, Toluol, Xylol und Isopropylbenzol oder halogenierte Kohlenwasserstoffe wie beispielsweise Di-, Tri- und Tetrachlormethan, Di-, Tri- und Tetrachlorethan und Chlorbenzol.

Die Umsetzung erfolgt vorzugsweise unter Säurekatalyse mit organischen und/oder anorganischen Säuren, die in Wasser bei 25°C einen pK-Wert < 4 aufweisen, beispielsweise Citronensäure, Weinsäure, Milchsäure, Chloressigsäure, Trichloressigsäure, Ameisensäure, Oxalsäure, Malonsäure, Maleinsäure, Fumarsäure, Phthalsäure, o-Nitrobenzoesäure, o-Chlorbenzoesäure, Methansulfonsäure, Benzolsulfonsäure, p-Toluolsulfonsäure, Naphthalinsulfonsäure, Salzsäure, Salpetersäure, Schwefelsäure, Phosphorsäure. Ebenfalls geeignet sind Lewis-Säuren wie beispielsweise Bortrifluorid oder Aluminiumchlorid.

Bei der Umacetalisierung ist der Umsatz der Alkohole b) vorzugsweise größer als 50 %, bezogen auf die eingesetzten Alkohole b).

Die Umsetzung wird im allgemeinen bei Temperaturen von 40 bis 150°C, vorzugsweise bei 60 bis 120°C und bei Normaldruck oder bei vermindertem Druck durchgeführt. Durch das Arbeiten bei vermindertem Druck z.B. von 1,5 bis 500 mbar, vorzugsweise von 10 bis 200 mbar, können während der Reaktion flüchtige Bestandteile des Reaktionsgemisches, vorwiegend der im Ausgangsprodukt gebundene Alkohol a) abdestilliert, das Reaktionsgleichgewicht in Richtung der Produkte verschoben und hohe Umsätze der Alkohole b) erzielt werden.

Die Reaktion wird nach Erreichen des gewünschten Umsatzes von mindestens 60%, vorzugsweise 80%, bezogen auf die eingesetzten Alkohole b), gemessen an der Abnahme der Alkohole b) oder an der Zunahme des freigesetzten Alkohols a), durch Absenken der Temperatur und ggf. Neutralisation der als Katalysator zugesetzten Säure mit Basen wie beispielsweise wäßrige oder alkoholische Natronlauge oder Kalilauge, mit Alkylaminen wie Triethylamin, Tri-n-propylamin, Tributylamin, Tri-2-ethylhexylamin, Dimethylethylamin oder Alkanolaminen wie Diethanolamin, Triethanolamin, Triisopropanolamin, Dimethylethanolamin, Diethylethanolamin, Dibutylethanolamin, Methyldiethanolamin oder Butyldiethanolamin beendet.

Die Umacetalisierungen können ein- oder auch mehrstufig durchgeführt werden. Im Falle von Alkoholgemischen b) kann die Reaktion z.B. zunächst mit einem Alkohol bis zu einem Umsatz von mindestens 60 % durchgeführt dann gegebenenfalls weitere Säure als Katalysator sowie der oder die verbleibenden Alkohole zugesetzt und die Reaktion weitergeführt werden.

Nach Beendigung der Reaktion erfolgt gegebenenfalls eine weitere Destillation bei reduziertem Druck von 5 bis 200 mbar und bei gegebenenfalls erhöhter Temperatur von 40 bis 140°C, um Restmengen an flüchtigen Komponenten weitgehend zu entfernen. Man erhält klare, farblose bis schwach gefärbte Harze mit einer Viskosität von vorzugsweise 0,5 bis 20 Pa·s (bei 23°C) und einem Gehalt an unumgesetztem Alkohol b) vorzugsweise unter 20 Gew.-%, insbesondere unter 10 Gew.-%, besonders bevorzugt unter 5 Gew.-%.

Falls gewünscht, können den Harzen auch noch Lösungsmittel zur Verdünnung zugesetzt werden.

Das erfindungsgemäße Bindemittel enthält neben dem Aminotriazinderivat A) ein radikalisches Polymerisat, Polykondensat oder Polyaddukt B), welches mit dem Aminotriazinderivat, z.B. durch einen Gehalt an aktiven Wasserstoffatomen (OH, COOH, NH- (z.B. in Carbamat- oder Amidgruppen), SH-Gruppen) vernetzbar ist.

Als Komponente B) eignen sich z.B. Alkydharze, Polyesterharze, Epoxiharze, Polyurethanharze, radikalische Polymerisate auf Basis von Acrylaten, Vinylestern, Dienen und Vinylaromaten oder deren Gemische.

Bevorzugt sind radikalische Polymerisate, Polykondensate oder Polyaddukte mit OH-Gruppen, vorzugsweise mit einer Hydroxylzahl von 20 bis 200 mg KOH/g Substanz (nach DIN 53240).

Die erfindungsgemäßen Bindemittel können z.B. 1 bis 99, vorzugsweise 1 bis 40, besonders bevorzugt 5 bis 30 Gew.-% der Aminotriazinderivate A) und 1 bis 99, vorzugsweise 60 bis 99 und besonders bevorzugt 70 bis 95 Gew.-%, Komponente B), bezogen auf die Summe A) und B), enthalten.

Die Bindemittel können z.B. in Form von Lösungen in Wasser oder organischen Lösungsmitteln oder in Form wäßriger Dispersionen vorliegen.

Den Bindemitteln können für die jeweilige beabsichtigte Verwendung übliche Hilfsmittel zugesetzt werden, z.B. Rheologiehilfsmittel, Verlaufsmittel, Entschäumer, Pigmente, Farbstoffe.

Insbesondere eignen sich die Bindemittel für Beschichtungen, insbesondere als Lackbindemittel.

Sie eignen sich dabei für unterschiedlichste Substrate, z.B. Glas, Kunststoff, Metall oder Holz.

Die Beschichtungen können durch die üblichen Auftragsverfahren z.B. durch Streichen, Tauchen, Rollen, Rakeln oder Spritzen aufgetragen werden.

Die erfindungsgemäßen Bindemittel zeichnen sich durch hohe Vernetzungsreaktivität aus, die sowohl beim thermischen Härten (Einbrennlacke) als auch bei Säurekatalyse (säurehärtende Lacke) deutlich kürzere Reaktionszeiten erlauben als bekannte vollalkylierte Aminoharze, wie sie beispielsweise als Ausgangsmaterial für die Umetherung eingesetzt wurden.

Als Katalysatoren für die Säurekatalyse eignen sich z.B. starke Säuren wie Sulfonsäuren (z. B. para-Toluolsulfonsäure, Naphthalinsulfonsäure etc.), Phosphorsäure oder Derivate der Phosphorsäure, Salzsäure oder andere Mineralsäuren eingesetzt. Es können auch Metallsalze wie z.B. Zinknitrat eingesetzt werden.

Weiterhin geeignet sind auch Aminsalze der genannten Säuren, z.B. p-Toluolsulfonsäure und Triethanolamin, wobei die Komponenten auch einzeln zugesetzt werden können, oder käufliche Aminsalze z.B. Nacure®-Typen.

Die erfindungsgemäßen Aminotriazinderivate eignen sich insbesondere auch als alleinige Bindemittel, z.B. zur Beschichtung von Möbelfinish-Folien. Sie können dazu die oben genannten Additive, insbesondere aber Weichmacher und Katalysatoren, z.B. Polyalkylenglykole und Arylsulfonsäuren, für die Härtung, üblicherweise bei hohen Temperaturen enthalten.

### Beispiele

Alle Prozentangaben sind, soweit nicht anders angegeben Gewichtsprozent.

Die in der Regel als Vorprodukte eingesetzten handelsüblichen Hexamethoximethylmelamin(HMMM)harze stellen Mischungen aus verschiedenen, z.T. auch mehrere Melaminkerne enthaltenden Verbindungen dar. Aus diesem Grund sind sie bei Temperaturen unter 46°C, dem Schmelzpunkt von HMMM, flüssig. Selbstverständlich kann auch reines, kristallines HMMM als Ausgangsmaterial verwendet werden, die Umacetalisierung führt in der Regel zu flüssigen Produkten. Für die Berechnung der Reaktionsansätze wurde für die verwendeten HMMM-Harze als mittlere Molmasse 390 g/ Mol, die Molmasse von HMMM verwendet.

Auch die Glykolether weisen, vor allem bei einer höheren Zahl von Ethylenoxideinheiten, Molekulargewichtsverteilungen auf. Auch hier berechnet sich das Molekulargewicht aus der mittleren Anzahl an gebundenen Ethylenoxideinheiten.

Der Katalysator p-Toluolsulfonsäure wird immer als Monohydrat mit der Molmasse 190,22 g/Mol eingesetzt.
1 Prüf- und Analysemethoden
   Freier Formaldehyd
   Bestimmung durch das titrimetrische Sulfitverfahren nach DIN 16746-A.
   Gesamtformaldehyd
   Titrimetrisch nach saurem Aufschluß.
   Alkohol und Glykolether, frei
   Gaschromatographische Bestimmung.
   Alkohol, gebunden
   Differenz zwischen dem gaschromatographisch, nach saurem Aufschluß gefundenen Gesamtalkoholgehalt und dem Gehalt an freiem Alkohol.
   Nicht flüchtige Anteile / Feststoffgehalt
   In Anlehnung an DIN 53216 werden 2g Harz und 2g Butanol auf ein Trockengehaltsblech eingewogen, zwei Stunden bei 125°C im Umluftofen eingebrannt, anschließend ausgewogen und der nicht flüchtige Anteil in Gew.-% (Einbrennrückstand) berechnet.
   Viskosität
   Die Bestimmung der Viskosität der Harze erfolgt mit einem Kegel-Platte-Viskosimeter, VISKO-PLOT der Fa. Epprecht Instruments+Controls AG, CH5606 Dottikon.
2 Umacetalisierungsprodukte

### Allgemeine Herstellvorschrift für die Beispiele 1 bis 16

In einer für die Vakuumdestillation geeigneten Apparatur mit Rührer, Kühler und Destillationsvorlage werden 1,5 mol eines Hexamethoximethylmelaminharzes mit der in den Beispielen der Tabelle 1 angegebenen Menge an Glykolether, ggf. mit weiteren hochsiedenden Alkoholen sowie mit der genannten Menge an p-Toluolsulfonsäure (pTSS) als Katalysator versetzt und auf die angegebene Temperatur erwärmt. Nach Erreichen der Temperatur wird eine Stunde bei dem angegebenen Druck destilliert und mit einer der eingesetzten Säuremenge äquivalenten Menge Tributylamin neutralisiert. Nach der Neutralisation wird auf 110°C erwärmt und nochmals 15 Minuten bei reduziertem Druck destilliert, ggf. mit der angegebenen Menge an 1-Methoxipropanol-2 verdünnt und auf Raumtemperatur abgekühlt. Man erhält nach Filtration klare, farblose oder schwach gelb gefärbte Harze, die mindestens 6 Monate stabil sind, d.h. keine Phasentrennung aufweisen und verarbeitbar bleiben. Die analytischen Daten sind in Tabelle 2 zusammengefaßt.

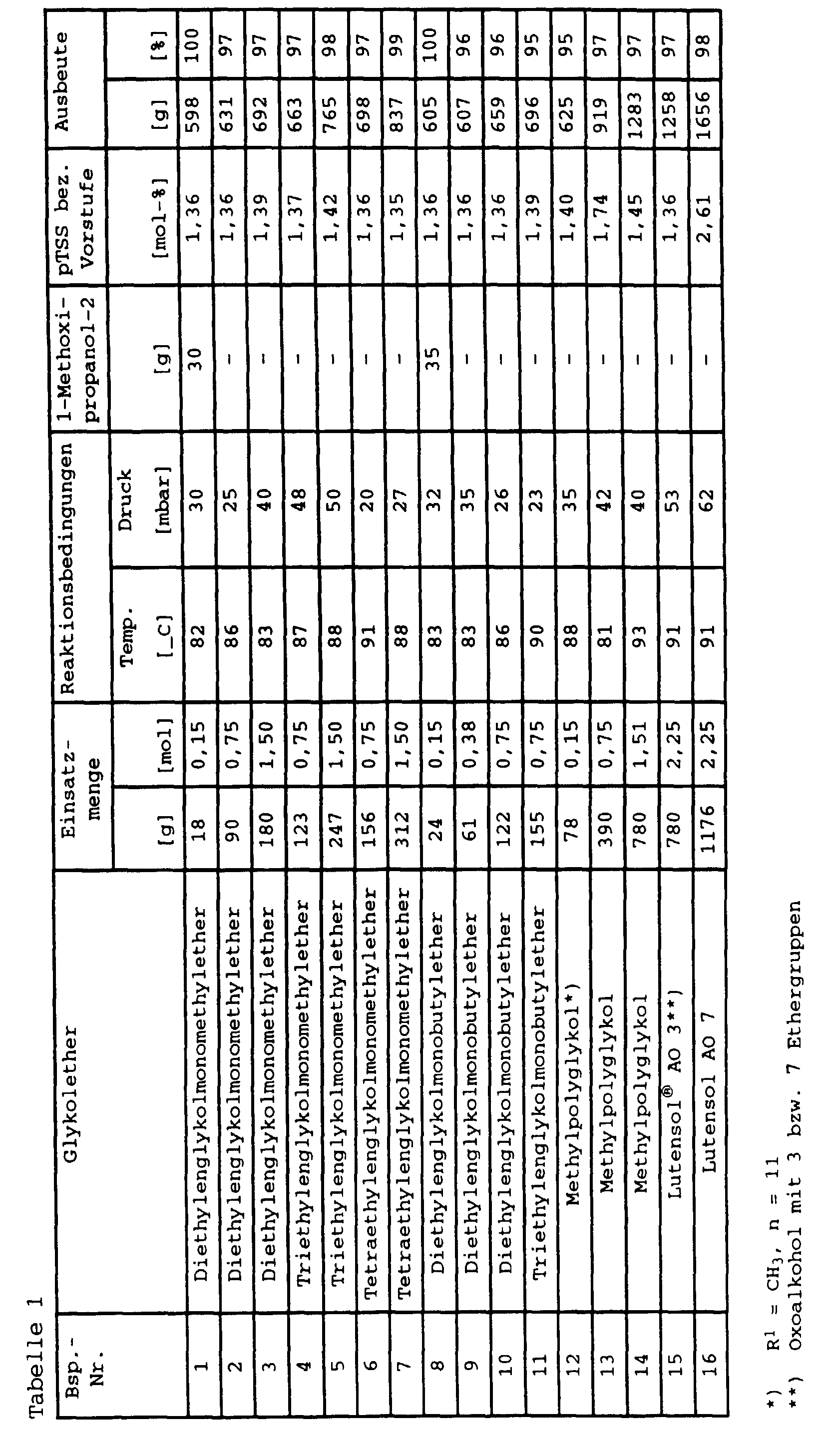

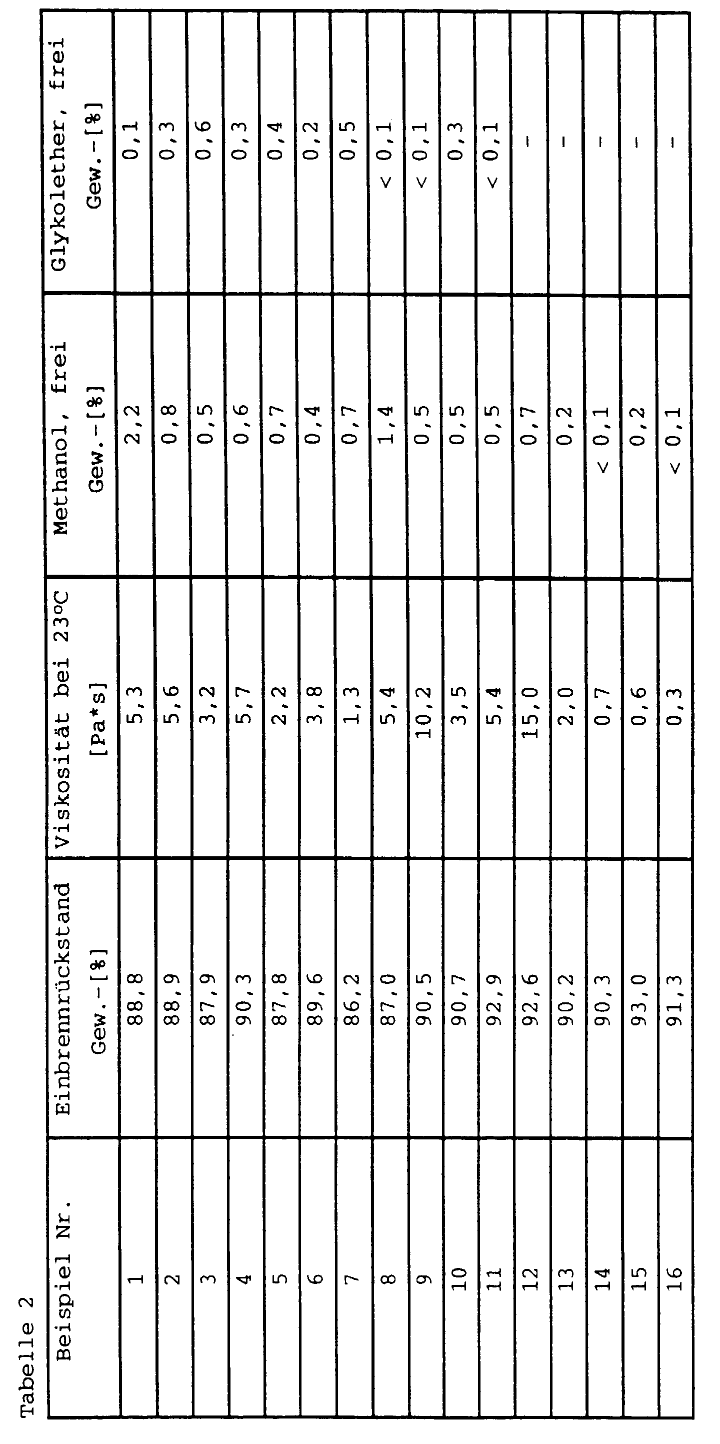

### Allgemeine Herstellvorschrift für die Beispiele 17 bis 20 und für Vergleichsbeispiel 1

1,5 mol eines Hexamethoximethylmelaminharzes wird in einer, mit Rührer, Kühler und Destillationsvorlage versehenen, für die Vakuumdestillation geeigneten Apparatur, mit 0,25 Mol Diethylenglykolmonomethylether pro Mol Melamin im Edukt versetzt. Man fügt die in den Beispielen genannte Säure als Katalysator in der angegebenen Menge zu und erwärmt auf 85°C. Nach Reduzierung des Druckes auf 15 mbar destilliert man flüchtige Bestandteile eine Stunde lang ab und neutralisiert anschließend mit einer der eingesetzten Säuremenge äquivalenten Menge Triethanolamin. Bei 110°C und 15 mbar wird nochmals 15 Minuten destilliert, ggf. mit der angegebenen Menge an Butylglycol verdünnt und auf Raumtemperatur abgekühlt. Nach Filtration erhält man klare, farblose oder schwach gelb gefärbte Harze mit den in Tabelle 3 angegebenen analytischen Kennzahlen.

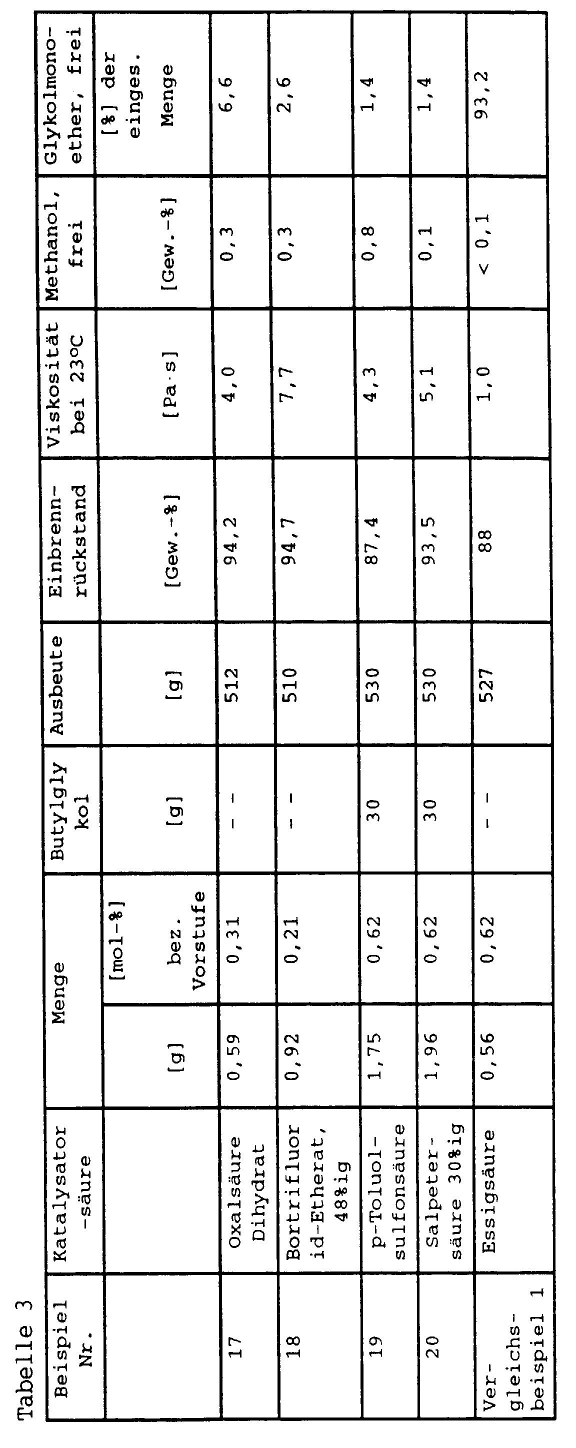

### Beispiel 21

In einem Reaktor mit Rührer, Kühler und Destillationsvorlage werden 460 g des Hexamethoximethylmelaminharzes Cymel 303 mit 36 g Diethylenglykolmonomethylether und 2,80 g p-Toluolsulfonsäure gemischt und auf 85°C erwärmt. Flüchtige Bestandteile werden während einer Stunde bei dieser Temperatur und einem Druck von 25 mbar abdestilliert. Nach der Neutralisation mit Tributylamin wird die Destillation weitere 15 Minuten bei 100°C und 25 mbar fortgesetzt. Nach Verdünnung mit 35 ml Methoxipropanol und Filtration erhält man 490 g eines klaren, farblosen Harzes mit einem Einbrennrückstand von 89,8 % und einer Viskosität von 4,3 Pa·s bei 23°C.

Das Harz enthält 0,3 % freies Methanol, der Umsatz an Diethylenglykolmonomethylether beträgt 96 %.

### Beispiel 22

514 g Hexabutoximethylmelamin werden mit 0,5 Mol Tetraethylenglykolmonomethylether pro Mol Melamin und 0,5 Gew.-% p-Toluolsulfonsäure versetzt und auf 90°C erwärmt. Bei 30 mbar und 90°C werden flüchtige Bestandteile und Reaktionsprodukte während 60 Minuten abdestilliert. Nach Neutralisation mit Triethanolamin wird weitere 15 Minuten bei reduziertem Druck und 110°C destilliert. Man erhält nach Abkühlen und Filtration ein klares, farbloses Harz mit einer Viskosität von 4,5 Pa*s bei 23°C in 95 % Ausbeute.

### Beispiel 23

Von einer Mischung aus 1,6 Mol (bezogen auf Melamin) eines Hexabutoximethylmelaminharzes werden mit 164 g Diethylenglykolmonobutylether und 0,5 Gew.-% p-Toluolsulfonsäure werden bei 90°C und 30 mbar flüchtige Bestandteile und Reaktionsprodukte während 60 Minuten abdestilliert. Eine weitere Destillation bei 25 mbar und 110°C erfolgt nach Neutralisation mit Methyldiethanolamin über 15 Minuten. Die Viskosität des klaren, farblosen Harzes beträgt nach Abkühlen und Filtration 4,0 Pa·s.

### Vergleichsbeispiel 2

In Analogie zu Beispiel 1 in DE-PS 24 14 426 wurden in einem Reaktor mit Rührer, Kühler und Destillationsvorlage 700 g eines Hexamethoximethylmelamins in 1.520 g Ethylenglykolmonomethylether gelöst, mit 28 g 65 %iger Salpetersäure versetzt und 35 Minuten bei 35°C gerührt. Nach Neutralisation mit 25 g 50 %iger Natronlauge stellte sich ein pH-Wert von 8,5 ein. Innerhalb von 2,5 Stunden wurde die Lösung bei einer Temperatur von 85°C und einem Druck von 90 bis 130 mbar eingedampft. Für weitere 30 Minuten wurde der Druck auf 30 mbar reduziert und die Destillation fortgesetzt. Nach Abfiltrieren des ausgefallenen Natriumnitrats erhielt man 940 g eines farblosen, klaren Harzes mit einer Viskosität von 650 mPa·s bei 23°C. Freies Methanol konnte nicht nachgewiesen werden, der Gehalt an freiem Ethylenglykolmonomethylether betrug 15,5 %.

### Allgemeine Herstellvorschrift für die Beispiele 24 bis 28

468 g eines Hexamethoximethylmelaminharzes wurden mit einem Mol Tetraethylenglykolmonomethylether pro Mol Melamin im HMMM-Harz und 1,5 Mol-% p-Toluolsulfonsäure versetzt. Man fügt die in Tabelle 4 angegebene Menge des dort aufgeführten Alkohols hinzu und erwärmt auf 85°C. Nach Erreichen der Temperatur wird der Druck auf 20 mbar gesenkt, anschließend werden während 80 Minuten flüchtige Bestandteile abdestilliert. Nach Abkühlen auf 60°C wird mit Tributylamin neutralisiert, auf 110°C erwärmt und bei reduziertem Druck weitere 20 Minuten destilliert. Nach Abkühlen und Filtration erhält man klare, farblose Harze in Ausbeuten über 95 % und mit den in Tabelle 4 angegebenen analytischen Daten.

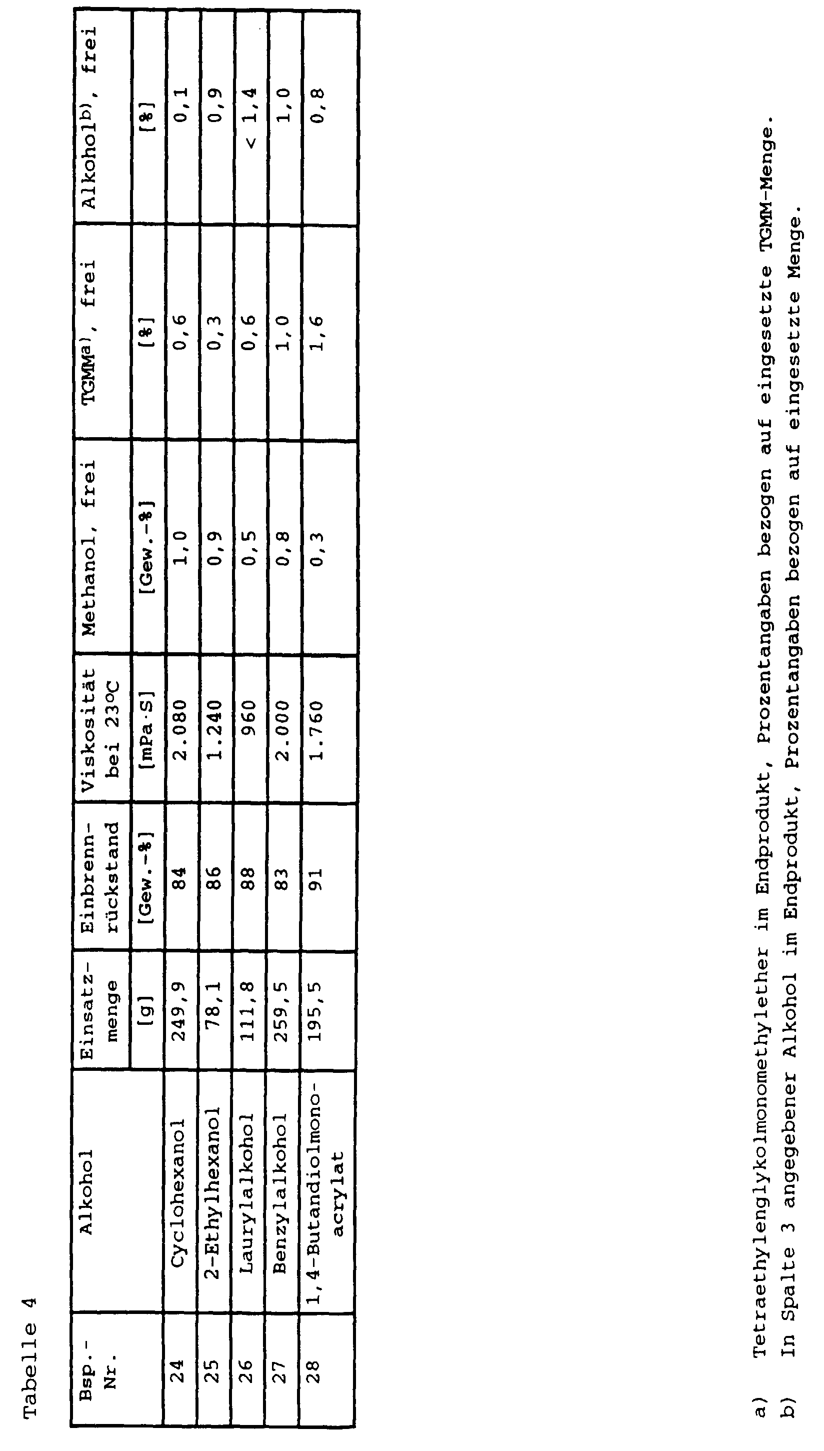

### 3. Lackformulierungen

### Allgemeine Herstellvorschrift für einen säurehärtenden Lack

70 g Alftalat® AR (Alkydharz) 300 (60 prozentig), 20 g des in den Beispielen genannten Melamin-Formaldehyd (MF)-Harzes (95 gew.-%ig) und 52 g Ethanol/l-Methoxipropanol-2 (2:1) werden mit einem Spatel verrührt. Als Härter setzt man dem Lack 12 Gew.-% p-Toluolsulfonsäure (20 prozentige Lösung in Ethanol) bezogen auf MF-Harz zu. Der so hergestellte Lack hat einen Feststoffgehalt von ca. 40 Gew.-%. In der Bindemittelmischung liegt Alftalat® AR 300 und Melaminharz im Verhältnis 7:3 vor.

Allgemeine Vorschrift für die Herstellung des lösemittelhaltigen weißpigmentierten Einbrennlacks

### Pigmentpaste

1.200 g des Titandioxidpigments Kronos® RN 57, 1.000 g des Alkydharzbindemittels Alkydal® R 40 (60 prozentig in Xylol) und 200 g Methoxipropanol werden auf einer Trichtermühle zweimal gerieben, so daß eine einheitliche Paste entsteht.

### Lackformulierung

30 g der oben beschriebenen Pigmentpaste, 22,5 g des Alkydharzes Alkydal R40 und eine 9,0 g festem Harz entsprechende Menge des in den Beispielen aufgeführten MF-Harzes werden mit einem Spatel verrührt. In der Bindemittelmischung liegt Alkydal R40 und MF-Harz im Verhältnis 7:3 und doppelt soviel Bindemittel wie Pigment vor (Lösemittel:Bindemittel:Pigment = 2:2:1).

Allgemeine Vorschrift für die Herstellung eines lösemittelhaltigen Klarlacks

Aus 50 g eines OH-gruppenhaltigen Polyacrylats (Luprenal® 240 S) mit einer OH-Zahl von 65 und einem Feststoffgehalt von 60 Gew.-% und 20 g Melaminharz, bezogen auf den Feststoffgehalt der in den Beispielen genannten Melaminharze, und einer für einen Feststoffgehalt von 50 Gew.-% ausreichenden Menge eines Kohlenwasserstoffs (Solvesso® 100) wird unter Rühren ein Klarlack hergestellt. Zur Beschleunigung der Härtung kann dem Lack 0,5 Gew.-% p-Toluolsulfonsäure zugesetzt werden.

Allgemeine Herstellvorschrift für einen weißpigmentierten, wäßrigen Can Coating-Lack

52 g Uradi® XP 258 SZ (70 %iges, OH-gruppenhaltiges Polyesterharz) werden mit 3 g Dimethylethanolamin neutralisiert und nach Zusatz von 0,4 g Additol® XW 395 (Benetzungsmittel) mit 50 g vollentsalztem Wasser verdünnt. Nach Zusatz von 42 g Kronos Titan Titandioxid 2190 (Weißpigment) wird 30 Minuten in einer Perlmühle angerieben.

Zur obigen Pigmentpaste werden dann unter Rühren zugesetzt: weitere 10 g Polyesterharz XP 258 SZ (neutralisiert mit Dimethylethanolamin), 11 g des Melaminformaldehydharzes, 0,2 g Surfynol® (50 %ig in Butylglykol) und 26 g vollentsalztes Wasser.

Im Falle eines Vergleichsbeispieles werden noch 0,5 g Toluolsulfonsäure als Katalysator zugesetzt.

Der so hergestellte Primer hat ein Polyester-Melaminharz-Mischungsverhältnis von 80:20, einen Festkörpergehalt von 48 % und einen Pigmentierungsgrad von 80 % bezogen auf das Bindemittel.

### 4. Lackprüfungen

Zur Verdeutlichung des anwendungstechnischen Vorteils der erfindungsgemäßen Bindemittel, bzw. Aminoharze wurde als Vergleich in den Lackprüfungen jeweils ein handelsübliches Hexamethoximethylmelaminharz (HMMM-Vergleich) wie es auch teilweise als Ausgangsmaterial in den vorangegangenen Beispielen eingesetzt wurde mit folgenden analytischen Kenndaten gewählt:

| | |
|---|---|
| Feststoffgehalt | 93 - 96 % |
| Viskosität (23°C) | 2000 - 6000 mPa*s |
| freier Formaldehyd | < 0,5 % |
| Methanol, gebunden | > 5 Mol/Mol Melamin |
| Formaldehyd, gebunden | > 5,5 Mol/Mol Melamin |

Um die Vergleichbarkeit zu gewährleisten wurden innerhalb einer Serie jeweils erfindungsgemäße Harze und das Standardharz unter vergleichbaren Bedingungen verarbeitet und geprüft.

### Allgemeine Vorschrift für die Prüfung der Einbrennreaktivität:

6 Glasplatten (90 x 150 x 2 mm) beschichtet man mittels eines 150-µm-Filmziehrahmens mit dem nach obiger Vorschrift hergestellten lösemittelhaltigen, weißpigmentierten Lack, der das in den folgenden Beispielen genannte Aminoharz enthält und 6 Glasplatten mit einem identischen Lack, der anstelle des erfindungsgemäßen Aminoharzes das handelsübliche Vergleichsharz enthält und härtet die Lackierungen nebeneinander in einem Trockenschrank bei konstanter Temperatur. Nach 10, 20, 30, 40, 50 und 60 min werden jeweils eine Glasplatte des Vergleichs und eine Glasplatte der Probe entnommen und nach mindestens zehnminütigem Abkühlen die Pendelhärte nach DIN 53157 bestimmt.

### Allgemeine Vorschrift für die Prüfung der Säurehärtung (Kempftest):

Mit Hilfe eines 100-µm-Filmziehrahmens beschichtet man eine 380 x 67 x 3 mm Glasplatte mit dem nach obiger Vorschrift hergestellten, säurehärtenden Lack. Nach jeweils fünfminütiger Lagerung in einem Umluftofen bei 40°C und anschließender fünfminütiger Lagerung bei Raumtemperatur wird der Fortschritt der Härtungsreaktion anhand der Abnahme der Klebrigkeit der Oberfläche mit einem Abkreide-Stempelgerät nach Kempf (Lieferant: Erichsen GmbH & CoKG, 5870 Hemer-Sundwig/Westf) bestimmt. Benotet wird dabei durch Vergleich mit einer Skala (Note 5 = stark klebrig, Note 0 = klebfrei). Der Härtungs- und Prüfzyklus wird insgesamt sechsmal durchgeführt.

### Allgemeine Vorschrift für die Gradientenofenprüfung

Den Einbrennlack zieht man mit einem 200-µm-Filmziehrahmen auf ein 567 x 90 x 0,75 mm Tiefziehblech auf, läßt 10 Minuten. ablüften und brennt in einem Gradientenofen, Typ 2612, der Fa. Byk 30 Minuten über einer Temperaturspanne von 80°C bis 180°C ein. Nach 24 stündiger Lagerung bei 50% rel. Luftfeuchte und 23°C, werden nacheinander folgende Prüfungen in den einzelnen Temperaturzonen durchgeführt:
- Die Schichtdicke bestimmt man mit einem Schichtdickemeßgerät, Typ Deltascope, der Fa. Fischer 7032 Sindelfingen.
- Die Pendelhärte bestimmt man nach DIN 53157 mit einem Gerät, Typ 5840, der Fa. Byk.
- Die Gitterschnittprüfung erfolgt nach DIN 53151 mit einem Gitterschnittmesser und Tesafilm.
- Die Erichsen-Tiefung wird nach DIN 53156 mit einem Gerät, Typ 5313, der Fa. Byk, ermittelt.
- Die Xylolbeständigkeit bestimmt man durch 10 minütige Lagerung der einen Seite des Blechs, auf der Längskante stehend, in einem Xylolbad, Eintauchtiefe ca. 3 cm und benotet dann mit 1 = keine Veränderung der Lackschicht, 0,5 = durch Anritzen mit dem Fingernagel leichte Beschädigung, 0 = der Lackfilm läßt sich durch Reiben mit einem Tuch ablösen.

### Allgemeine Vorschrift zur Prüfung des wäßrigen Can Coating-Lackes

### Anfangsreaktivität

Der Weißlack wird mit einem 50 µm Spiralrakels auf ein Weißblech 60 Sekunden appliziert (10-15 µm Trockenschichtstärke) und 60 Sekunden bei 205°C im Umluftofen eingebrannt. Nach 2 Stunden Abkühlzeit wird die Beständigkeit der Beschichtung gegenüber Methylethylketon (MEK) geprüft: Dazu wird ein mit MEK getränktes Tuch durch Aufdrücken mit dem Zeigefinger auf der Lackierung hin und her bewegt (einmal hin und her = 1 Doppelhub) bis die Beschichtung zerstört ist, maximal jedoch 100 Doppelhübe.

### Reverse Curing

Das Weißblech wird wie oben beschrieben beschichtet, eingebrannt und anschließend mit einer handelsüblichen, roten Can Coating-Druckfarbe mit einer Rasterwalze bedruckt (ca. 5 µm Trockenschichtstärke)

Nach 15 Minuten Überbrennen bei 250°C im Umlufttrockenschrank wird die MEK-Beständigkeit der Gesamt schicht wie oben beschrieben bestimmt.

### Prüfergebnisse

Unter Verwendung der in Tabelle 5 und 6 aufgeführten MF-Harze wurden weiß pigmentierte, lösemittelhaltige Einbrennlacke sowie säurehärtende Lacke nach der allgemeinen Herstellvorschrift hergestellt. Die Pendelhärten nach Einbrennen bei 150°C sind in Tabelle 5 angegeben. Die Ergebnisse der Säurehärtung (Kempf-Tests) sind in Tabelle 6 zusammengefaßt.

**Tabelle 5**

| Pendelhärte (Sekunden) | | | | | | |
|---|---|---|---|---|---|---|
| MF-Harze aus Beispiel Nr. | nach 10 min | nach 20 min | nach 30 min | nach 40 min | nach 50 min | nach 60 min |
| 3 | 36 | 97 | 133 | 154 | 167 | 172 |
| 5 | 35 | 83 | 126 | 153 | 162 | 171 |
| 7 | 35 | 85 | 118 | 134 | 158 | 161 |
| 8 | 57 | 91 | 122 | 143 | 158 | 168 |
| 12 | 56 | 116 | 129 | 148 | 158 | 165 |
| 20 | 14 | 44 | 71 | 78 | 83 | 91 |
| 21 | 63 | 94 | 110 | 116 | 130 | 137 |
| Vergleichs-beisp. 1 | 8 | 23 | 37 | 43 | 53 | 58 |
| Vergleichs-beisp. 2 | 7 | 10 | 27 | 30 | 36 | 40 |
| HMMM-Vergleich | 10 | 30 | 44 | 58 | 71 | 82 |

Die hohen Werte für die Pendelhärte bei Verwendung der MF-Harze aus den Beispielen gegenüber den Vergleichsbeispielen bzw. HMMM verdeutlichen die hohe Reaktivität. Die erhöhte Reaktivität bei der Säurehärtung wird durch das schnelle Erreichen eines klebfreien Films dokumentiert.

**Tabelle 6**

| Kempftest (Note) | | | | | | |
|---|---|---|---|---|---|---|
| Aminoharz aus Beispiel Nr. | 1 Zyklus | 2 Zyklen | 3 Zyklen | 4 Zyklen | 5 Zyklen | 6 Zyklen |
| 3 | 0 - 1 | 0 | - - | - - | - - | - - |
| 5 | 1 - 2 | 1 | 0 - 1 | 0 - 1 | 0 | - - |
| 7 | 1 - 2 | 0 - 1 | 0 - 1 | 0 | -- | -- |
| 8 | 1 | 0 - 1 | 0 | - - | - - | - - |
| 12 | 1 | 0 - 1 | 0 | - - | - - | - - |
| 20 | 0 - 1 | 0 - 1 | 0 | - - | - - | - - |
| 21 | 1 | 0 - 1 | 0 - 1 | 0 | - - | - - |
| Vergleichsbeispiel 1 | 5 | 5 | 4 | 4 | 3 - 4 | 3 - 4 |
| Vergleichsbeispiel 2 | 3 - 4 | 2 | 1 - 2 | 0 | - - | - - |
| HMMM-Vergleich | 5 | 3 - 4 | 2 - 3 | 1 - 2 | 1 | 0 - 1 |

Aus den erfindungsgemäßen Aminoharzen der Beispiele 24, 27, und 28 sowie aus dem Vergleichs-HMMM-Harz werden säurehärtende Klarlacke sowie lösemittelhaltige, weißpigmentierte Lacke für die Prüfung der Einbrennreaktivität hergestellt und nach den allgemeinen Vorschriften für die Aufnahme der Härtekurve und für die Prüfung der Säurehärtung verarbeitet und geprüft. Die Ergebnisse der thermischen Härtung sowie der Säurehärtung sind in den Tabellen 7 und 8 zusammengefaßt.

**Tabelle 7**

| Pendelhärte (Sekunden) | | | | | | |
|---|---|---|---|---|---|---|
| MF-Harz aus Beispiel Nr. | nach 10 min | nach 20 min | nach 30 min | nach 40 min | nach 50 min | nach 60 min |
| 24 | 25 | 67 | 73 | 99 | 122 | 136 |
| 27 | 12 | 43 | 88 | 99 | 130 | 144 |
| 28 | 15 | 97 | 139 | 157 | 162 | 171 |
| HMMM-Vergleich | 0 | 23 | 35 | 58 | 74 | 92 |

**Tabelle 8**

| Kempftest (Note) | | | | | | |
|---|---|---|---|---|---|---|
| MF-Harz aus Beispiel Nr. | 1 Zyklus | 2 Zyklen | 3 Zyklen | 4 Zyklen | 5 Zyklen | 6 Zyklen |
| 24 | 3 | 1 | 0 - 1 | 0 | - - | - - |
| 27 | 2 | 1- 2 | 1 | 0 - 1 | 0 | - - |
| 28 | 4 | 1 - 2 | 0 - 1 | 0 | - - | - - |
| HMMM-Vergleich | 4 - 5 | 3 - 4 | 2 | 1 - 2 | 0 - 1 | 0 |

Mit den MF-Harzen aus den Beispielen 2, 6 und 9 und mit einem HMMM-Vergleich wurden weißpigmentierte, lösemittelhaltige Einbrennlacke nach oben aufgeführter allgemeiner Vorschrift hergestellt:

Die so hergestellten Lacke wurden auf Tiefziehbleche aufgerakelt und gemäß der allgemeinen Vorschrift im Gradientenofen eingebrannt und geprüft. Die Ergebnisse der Prüfung sind in Tabelle 9 und 10 zusammengefaßt.

Die hohen Werte für die Pendelhärte bei relativ niedrigen Einbrenntemperaturen (Tabelle 9) verdeutlichen die hohe Reaktivität ebenso wie das Erreichen eines xylolbeständigen Films bei Temperaturen unter 180°C (Tabelle 10).

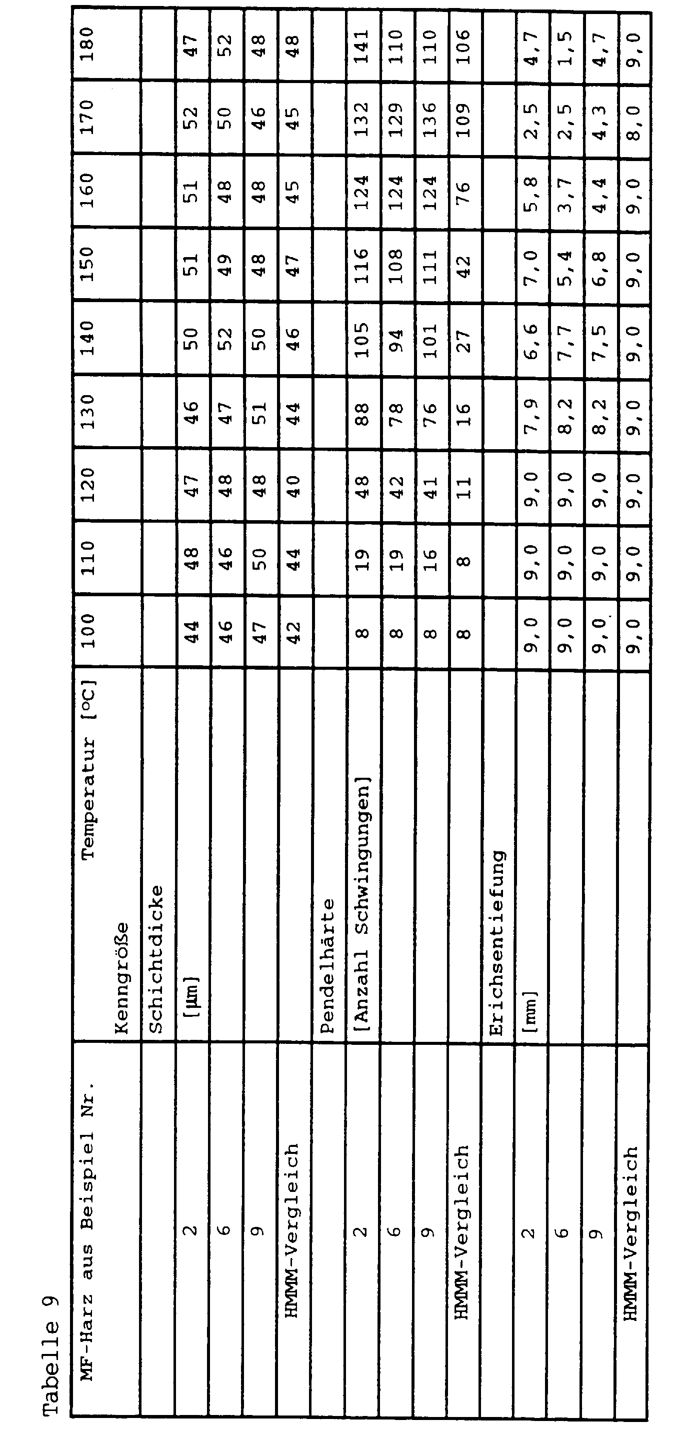

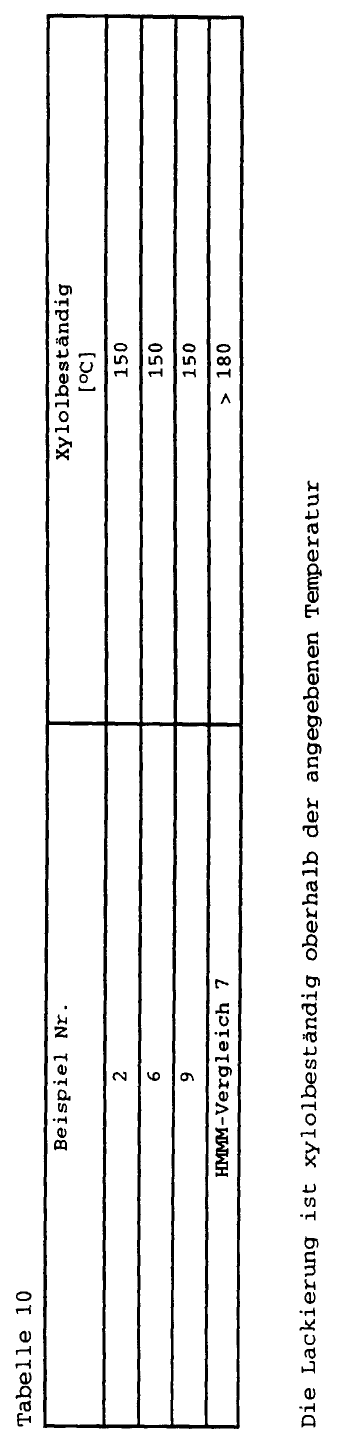

Aus dem erfindungsgemäßen Aminoharz des Beispiels 19 sowie aus einem HMMM-Vergleichsharz wurden gemäß der allgemeinen Vorschrift lösemittelhaltige Klarlacke und ein säurekatalysierter lösemittelhaltiger Klarlack hergestellt. Die so hergestellten Lacke wurden auf Tiefziehblech aufgerakelt, gemäß der allgemeinen Vorschrift im Gradientenofen eingebrannt und geprüft. Die Prüfergebnisse sind in den Tabellen 11 und 12 zusammengefaßt und zeigen durch das rasche Ansteigen der Pendelhärte und die bei niedriger Temperatur erreichten Wasser- und Xylolbeständigkeiten die hohe Reaktivität der erfindungsgemäßen Melamin-Formaldehyd-Harze, die durch Säurekatalyse weiter erhöht werden kann.

**Tabelle 11**

| MF-Harz aus Bsp.-Nr. | Temperatur [°C] | 100 | 110 | 120 | 130 | 140 | 150 | 160 | 170 | 180 |
|---|---|---|---|---|---|---|---|---|---|---|
| | Kenngröße | | | | | | | | | |
| | Schichtdicke | | | | | | | | | |
| 19 ohne pTSS | [µm] | 28 | 34 | 36 | 37 | 37 | 39 | 36 | 35 | 34 |
| 19 mit pTSS | | 35 | 37 | 38 | 39 | 38 | 36 | 36 | 35 | 34 |
| HMMM-Vergleich | | --^{a)} | -- | 28 | 29 | 33 | 33 | 30 | 31 | 32 |

| | Pendeldämpfung | | | | | | | | | |
|---|---|---|---|---|---|---|---|---|---|---|
| 19 ohne pTSS | [Anzahl schwingungen] | 4 | 11 | 19 | 29 | 41 | 63 | 81 | 97 | 102 |
| 19 mit pTSS | | 40 | 56 | 68 | 80 | 87 | 95 | 96 | 102 | 103 |
| HMMM-Vergleich | | -- | -- | -- | -- | -- | -- | 12 | 44 | 82 |

| | | | | | | | | | | |
|---|---|---|---|---|---|---|---|---|---|---|
| ^{a)} Meßwert wegen unzureichender Härtung des Lackes nicht bestimmbar | | | | | | | | | | |

**Tabelle 12**

| MF-Harz aus Bsp.-Nr. | Die Lackierung ist xylolbeständig oberhalb einer Temperatur von ... | Die Lackierung ist wasserbeständig oberhalb einer Temperatur von ... |
|---|---|---|
| 19 ohne pTSS | 180°C | 120°C |
| 19 mit pTSS | 160°C | 120°C |
| HMMM-Vergleich | > 190°C | 170°C |

Gemäß den oben angegebenen, allgemeinen Vorschriften zur Herstellung und zur Prüfung wäßriger Can Coating Lacke wurden die Beispiele gemäß nachstehender Tabelle 13 hergestellt und geprüft.

**Tabelle 13**

| MF-Harz aus Bsp.-Nr. | Anfangsreaktivität ¹⁾ (Doppelhübe mit MEK) | Reverse Curing ²⁾ (Doppelhübe mit MEK) |
|---|---|---|
| Beispiel 2 | > 100 | > 100 |
| HMMM-Vergleich | 5 | > 100 |
| HMMM-Vergleich mit Säurekatalyse | > 100 | 40 |

| | | |
|---|---|---|
| ¹⁾ Einbrennen 1 Minute bei 205°C | | |
| ²⁾ Einbrennen 1 Minute bei 205°C und 15 Minuten bei 250°C | | |

Das Beispiel macht deutlich, daß das erfindungsgemäße Harz ohne Katalysatorzusatz die gewünschte hohe Anfangsreaktivität erzielen läßt, ohne daß, wie beim Vergleichsbeispiel mit Katalysatorzusatz zu ersehen, ein Bindemittelabbau (Reverse Curing) nach Überbrennen auftritt.

## Patentansprüche

1. Bindemittel, enthaltend
A) ein Aminotriazinderivat, bei dem die primären Aminogruppen des Triazins im Mittel mit mindestens einem Mol Formaldehyd pro Mol primärer Aminogruppen methyloliert und diese Methylolgruppen im Mittel mit mindestens 0,5 Mol primärem Alkohol pro Mol Methylolgruppe verethert sind, und es sich bei den primären Alkoholen um ein Gemisch enthaltend
a) 0,5 - 99,5 mol-% eines C₁-C₄-Alkanols und
b) 99,5 - 0,5 mol-% eines Alkohols der Formel
R¹-O-[R²-O]ₙ-R³-OH I,
worin R¹ für eine C₁-C₂₄-Alkylgruppe oder eine C₆-C₁₂-Arylgruppe, welche gegebenenfalls durch ein bis drei C₁-C₈-Alkylgruppen substituiert sein kann und, R² und R³ unabhängig voneinander für eine C₂-C₈-Alkylengruppe stehen und n eine ganze Zahl von 1 - 100 bedeutet, oder eines Gemisches von höhersiedenden Alkoholen mit einem Siedepunkt oberhalb 120°C bei 1 bar, welches mindestens 10 mol-%, bezogen auf die höhersiedenden Alkohole, Alkohole der Formel I enthält, handelt und
B) ein mit dem Aminotriazinderivat vernetzbares radikalisches Polymerisat, Polykondensat oder Polyaddukt.

2. Bindemittel gemäß Anspruch 1, enthaltend ein radikalisches Polymerisat Polykondensat oder Polyaddukt mit einer Hydroxylzahl von 20 bis 200,

3. Bindemittel gemäß Anspruch 1 oder 2, wobei das Bindemittel in Form einer wäßrigen Lösung oder Dispersion der Komponenten A und B vorliegt.

4. Bindemittel nach einem der Ansprüche 1 bis 3, enthaltend ein Aminotriazinharz bei dem die primären Aminogruppen des Triazins mit mindestens 1,7 Mol Formaldehyd pro Mol primärer Aminogruppe methyloliert und diese Methylolgruppen mit mindestens 0,7 Mol primärem Alkohol verethert sind.

5. Aminotriazinderivat, bei dem die primären Aminogruppen des Triazins im Mittel mit mindestens einem Mol Formaldehyd pro Mol primärer Aminogruppen methyloliert und diese Methylolgruppen im Mittel mit mindestens 0,5 Mol primärem Alkohol pro Mol Methylolgruppe verethert sind, und es sich bei dem primären Alkohol um ein Gemisch, enthaltend
a) 50 - 99,5 mol-% eines C₁-C₄-Alkanols und
b) 0,5 - 50 mol-% eines Alkohols der obigen Formel I oder eines Gemischs von höhersiedenden Alkoholen mit einem Siedepunkt oberhalb 12°C bei 1 bar, welches mindestens 10 mol-%, bezogen auf die höhersiedenden Alkohole, Alkohole der Formel I enthält.

6. Aminotriazinderivat gemäß Anspruch 5, wobei es sich beim primären Alkohol um ein Gemisch aus
a) 90 - 99 mol-% eines C₁-C₄-Alkanols und
b) 10 - 1 mol-% eines Alkohols der Formel I oder des Gemischs von höhersiedenden Alkoholen handelt.

7. Aminotriazinderivat gemäß Anspruch 5 oder 6, welches hergestellt wurde durch Umacetalisierung von Aminotriazinderivaten, welche lediglich mit C₁-C₄-Alkanolen verethert sind, mit den Alkoholen b) in Gegenwart einer Säure, welche in Wasser einen pK-Wert < 4 bei 25°C aufweist.

8. Aminotriazinderivat gemäß Anspruch 7, wobei der Umsatz der Alkohole b) bei der Umacetalisierung größer 50 %, bezogen auf die eingesetzten Alkohole b) ist.

9. Verwendung von Bindemitteln gemäß Anspruch 1 bis 4 als Bindemittel in Lacken.

10. Mit einem Bindemittel gemäß Anspruch 1 bis 4 beschichtete Substrate.

## Claims

1. A binder comprising
A) an aminotriazine derivative in which the primary amino groups of the triazine are methylolated on average with at least one mole of formaldehyde per mole of primary amino groups, and these methylol groups are etherified on average with at least 0.5 mol of primary alcohol per mole of methylol group and the primary alcohols are a mixture containing
a) 0.5 - 99.5 mol% of a C₁-C₄-alkanol and
b) 99.5 - 0.5 mol% of an alcohol of the formula
R¹-O-[R²-O]ₙ-R³-OH I,
in which R¹ is C₁-C₂₄-alkyl or C₆-C₁₂-aryl which may be unsubstituted or substituted by from one to three C₁-C₈-alkyl groups, and R² and R³ independently of one another are C₂-C₈-alkylene and n is an integer from 1 to 100, or of a mixture of higher-boiling alcohols having a boiling point of above 120°C at 1 bar which contains at least 10 mol%, based on the higher-boiling alcohols, of alcohols of the formula I, and
B) a radical polymer, polycondensation product or polyadduct which is crosslinkable with the aminotriazine derivative.

2. A binder as claimed in claim 1, comprising a radical polymer, polycondensation product or polyadduct having a hydroxyl number of from 20 to 200.

3. A binder as claimed in claim 1 or 2, which is in the form of an aqueous solution or dispersion of components A and B.

4. A binder as claimed in any of claims 1 to 3, comprising an aminotriazine resin in which the primary amino groups of the triazine are methylolated with at least 1.7 mol of formaldehyde per mole of primary amino group, and these methylol groups are etherified with at least 0.7 mol of primary alcohol.

5. An aminotriazine derivative in which the primary amino groups of the triazine are methylolated on average with at least one mole of formaldehyde per mole of primary amino groups, and these methylol groups are etherified on average with at least 0.5 mol of primary alcohol per mole of methylol group, and the primary alcohol is a mixture containing
a) 50 - 99.5 mol% of a C₁-C₄-alkanol and
b) 0.5 - 50 mol% of an alcohol of the above formula I or of a mixture of higher-boiling alcohols having a boiling point above 120°C at 1 bar which contains at least 10 mol%, based on the higher-boiling alcohols, of alcohols of the formula I.

6. An aminotriazine derivative as claimed in claim 5, in which the primary alcohol is a mixture of
a) 90 - 99 mol% of a C₁-C₄-alkanol and
b) 10 - 1 mol% of an alcohol of the formula I or of the mixture of higher-boiling alcohols.

7. An aminotriazine derivative as claimed in claim 5 or 6, which has been prepared by transacetalization of aminotriazine derivatives, etherified only with C₁-C₄-alkanols, with the alcohols b) in the presence of an acid which in water at 25°C has a pK < 4.

8. An aminotriazine derivative as claimed in claim 7, where the conversion of the alcohols b) in the transacetalization is greater than 50% based on the alcohols b) employed.

9. The use of a binder as claimed in any of claims 1 to 4 as a binder in coating materials.

10. A substrate coated with a binder as claimed in any of claims 1 to 4.

## Revendications

1. Liant contenant
A) un dérivé d'aminotriazine pour lequel les groupements amino primaires de la triazine sont méthylolés dans le milieu avec au moins une mole de formaldéhyde par mole de groupements amino primaire et ces groupements méthylol sont éthérifiés dans le milieu avec au moins 0,5 mole d'alcool primaire par mole de groupement méthylol, les alcools primaires étant ici un mélange contenant
a) 0,5 à 99,5% en moles d'un alcanol en C₁-C₄ et
b) 99,5 à 0,5% en moles d'un alcool de formule
R¹-O-[R²-O]ₙ-R³-OH I
où R¹ est mis pour un groupement alkyle en C₁-C₂₄ ou un groupement aryle en C₆-C₁₂, éventuellement substitué par un à trois groupements alkyle en C₁-C₈, R² et R³ sont mis indépendamment l'un de l'autre pour un groupement alkylène en C₂-C₈ et n est mis pour un nombre entier de 1 à 100, ou d'un mélange d'alcools à hauts points d'ébullition avec un point d'ébullition supérieur à 120°C sous 1 bar, lequel contient au moins 10% en moles, par rapport aux alcools à hauts points d'ébullition, d'alcools de formule I et
B) un polymère, un polycondensat ou un polyadduit radicalaires, pouvant être réticulés avec le dérivé d'aminotriazine.

2. Liant selon la revendication 1, contenant un polymère, un polycondensat ou un polyadduit radicalaires ayant un indice d'hydroxyle de 20 à 200.

3. Liant selon la revendication 1 ou 2, où le liant se présente sous forme d'une solution ou d'une dispersion aqueuse des composants A et B.

4. Liant selon l'une quelconque des revendications 1 à 3, contenant une résine d'aminotriazine pour laquelle les groupements amino primaires de la triazine sont méthylolés avec au moins 1,7 mole de formaldéhyde par mole de groupement amino primaire et ces groupements méthylol sont éthérifiés avec au moins 0,7 mole d'alcool primaire.

5. Dérivé d'aminotriazine pour lequel les groupements amino primaires de la triazine sont méthylolés dans le milieu avec au moins une mole de formaldéhyde par mole de groupements amino primaire et ces groupements méthylol sont éthérifiés dans le milieu avec au moins 0,5 mole d'alcool primaire par mole de groupement méthylol, les alcools primaires étant ici un mélange contenant
a) 50 à 99,5% en moles d'un alcanol en C₁-C₄ et
b) 0,5 à 50% en moles d'un alcool de la formule susmentionnée I ou un mélange d'alcools à hauts points d'ébullition avec un point d'ébullition supérieur à 12°C sous 1 bar, lequel contient au moins 10% en moles, par rapport aux alcools à hauts points d'ébullition, d'alcools de formule I.

6. Dérivé d'aminotriazine selon la revendication 5, où l'alcool primaire est un mélange de
a) 90 à 99% en moles d'un alcanol en C₁-C₄ et
b) 10 à 1% en moles d'un alcool de formule I ou du mélange d'alcools à hauts points d'ébullition.

7. Dérivé d'aminotriazine selon la revendication 5 ou 6, préparé par acétalisation de dérivés aminotriazine, éthérifiés uniquement avec des alcanols en C₁-C₄, avec les alcools b) en présence d'un acide présentant une valeur de pK < 4 à 25°C dans l'eau.

8. Dérivé d'aminotriazine selon la revendication 7 où la conversion des alcools b) lors de l'acétalisation est supérieure à 50%, par rapport aux alcools b) introduits.

9. Utilisation de liants selon l'une quelconque des revendications 1 à 4 en tant que liants dans des laques.

10. Substrats enduits d'un liant selon l'une quelconque des revendications 1 à 4.
